# FASCICULE DE BREVET EUROPEEN

(11) **EP 3 423 335 B1**
(45) Date de publication et mention de la délivrance du brevet: **29.04.2020**
(21) Numéro de dépôt: 17707645.2
(22) Date de dépôt: 08.02.2017
(51) Int. Cl.: B62D 21/15, B62D 25/16

(54) **VÉHICULE AVEC FIXATION D'AILE AVANT FUSIBLE EN CHOC FRONTAL**
FAHRZEUG, BEI DEM DIE STOSSFÄNGERBEFESTIGUNG BEI EINEM FRONTALAUFPRALL SCHMILZT
VEHICLE IN WHICH THE FRONT FENDER ATTACHMENT MELTS ON AN FRONT IMPACT

(30) Priorité: 01.03.2016 FR 1651724
(43) Date de publication de la demande: 09.01.2019
(73) Titulaire: PSA Automobiles SA, 78300 Poissy (FR)
(72) Inventeur: GIGANDET, Nathalie, 25310 Thulay (FR); BESSETTE, Damien, 25150 Ecot (FR); MERESSE, Ludovic, 25750 Arcey (FR)
(86) Numéro de dépôt international: PCT/FR2017/050283
(87) Numéro de publication internationale: WO 2017/149215

(56) Documents cités:
- EP-A1- 2 011 722
- EP-A2- 1 293 417
- DE-A1-102005 039 055
- FR-A1- 2 894 542
- FR-A1- 2 946 945
- JP-A- 2000 177 647
- JP-A- 2008 213 518

## Description

L'invention s'inscrit dans le domaine automobile et concerne plus particulièrement les structures avant de véhicules automobiles et les véhicules présentant de telles structures avant. L'invention est en relation avec les dommages d'équipements qui peuvent survenir en cas de collision.

De nos jours, les véhicules automobiles doivent satisfaire de plus en plus d'exigences en matière de sécurité, notamment de sécurité passive. Les moyens mis en oeuvre doivent permettre de protéger les occupants d'un véhicule, par exemple lors d'un choc frontal à haute vitesse. Ils doivent également permettre de maîtriser les coûts de réparation du véhicule lors d'un choc dit urbain, c'est-à-dire à faible vitesse. Enfin ils doivent permettent de limiter autant que possible le caractère agressif que peut présenter le véhicule, en particulier vis-à-vis des piétons et donc réduire la présence de points durs sous-capot et les risques de blessures graves au niveau des jambes.

Il est connu d'effectuer des tests de réparabilité permettant d'évaluer le comportement du véhicule par exemple en cas de choc frontal à faible vitesse (aux alentours de 16 km/h) avec différents schémas de recouvrement de la face avant du véhicule. Ces tests permettent de définir un panier de pièces à changer.

Ainsi par exemple lors d'un test avec un recouvrement de la face avant du véhicule de l'ordre de 40%, il a été constaté que le projecteur avant est poussé vers l'arrière du véhicule et engendre une déformation de la doublure d'aile avant, du brancard, du support avant d'aile avant et du support inférieur d'aile avant. Ces pièces sont déformées au-delà de leur limite d'élasticité ce qui implique de devoir les remplacer. Or la doublure d'aile avant et le brancard avant sont des pièces de structure du véhicule et leur remplacement engendre donc des coûts de réparation importants.

Certaines compagnies d'assurance établissent des grilles de remboursement liées aux résultats obtenus par le véhicule lors de tests de réparabilité. Le montant du panier de pièces à changer va permettre de calculer un forfait de remboursement. Il est généralement aussi un élément de calcul de la prime d'assurance du véhicule.

Il existe une demande pour diminuer le panier de pièces à changer en cas de collision frontale et donc un besoin constant d'améliorer le comportement du véhicule en matière de réparabilité. En particulier, il existe un besoin pour des solutions permettant de préserver les pièces de structure du véhicule dont le remplacement est coûteux et/ou pour réduire encore le caractère agressif du véhicule lors d'une collision avec un piéton.

L'invention a pour objectif d'apporter une solution à au moins un des problèmes rencontrés par l'art antérieur. En particulier l'invention a pour objectif de proposer un véhicule présentant une réparabilité améliorée par rapport à l'art antérieur. L'invention a donc pour but de proposer une solution permettant d'éviter une déformation de la doublure d'aile avant et/ou du brancard en cas de choc à faible vitesse. Plus particulièrement, l'invention a pour but d'éviter la déformation d'une ou plusieurs pièces, et de préférence de toutes les pièces, choisies parmi le brancard avant, la doublure d'aile avant, le support avant d'aile avant et le support inférieur d'aile avant. L'invention a également pour objectif de diminuer le caractère agressif du véhicule et donc d'améliorer encore son comportement en cas de choc piéton et en particulier en cas de choc au niveau de la jambe dudit piéton.

A cet effet, l'invention a pour objet un véhicule comprenant au moins une aile avant et au moins une doublure d'aile avant, l'aile avant étant liée à la doublure d'aile avant par au moins un système de liaison fusible configuré pour rompre ou se détacher sous l'application d'une force visant à écarter l'aile avant et la doublure d'aile avant l'une de l'autre selon l'axe transversal du véhicule. Un tel véhicule est connu du document JP 2000 177647, dans lequel le système de liaison est conçu pour se détacher.

Par ailleurs l'invention prévoit que le véhicule comprend au moins une aile avant fixée à un support avant d'aile avant et au moins une doublure d'aile avant fixée à un support inférieur d'aile avant, le véhicule étant remarquable en ce que le système de liaison fusible entre l'aile avant et la doublure d'aile avant assure la liaison entre le support avant d'aile avant et le support inférieur d'aile avant.

Selon des modes particuliers de réalisation, l'invention peut comprendre l'une ou l'autre des caractéristiques suivantes prises isolément ou selon toutes les combinaisons possibles :
- Le système fusible est configuré pour rompre ou se détacher sous l'application d'une force supérieure à 60 daN, de préférence supérieure à 80 daN, de préférence encore supérieure à 100 daN.
- Le support inférieur d'aile avant et/ou sur le support avant d'aile avant comprend une platine de fixation avec au moins un trou oblong pour le passage d'une vis de fixation, ledit trou étant débouchant sur un des côtés dudit support, et orienté de façon à permettre un coulissement de ladite vis selon sa longueur lors de l'application d'une force visant écarter les supports l'un de l'autre selon la direction transversale du véhicule.
- Le système de liaison fusible comprend au moins deux vis assemblant entre eux le support avant d'aile avant et le support inférieur d'aile avant, chaque vis étant reçue dans un trou oblong et étant tarée pour maintenir assemblés lesdits supports avant et inférieur sous l'application d'une force inférieure à 30 daN au niveau de chacune desdites vis visant à écarter lesdits supports l'un de l'autre selon l'axe transversal du véhicule, de préférence inférieure à 40 daN.

- Le système de liaison fusible comprend au moins deux vis assemblant entre eux le support avant d'aile avant et le support inférieur d'aile avant, chaque vis étant reçue dans un trou oblong et étant tarée pour autoriser la séparation desdits supports avant et inférieur sous l'application d'une force supérieure à 30 daN au niveau de chacune desdites vis visant à écarter lesdits supports l'un de l'autre selon l'axe transversal du véhicule, de préférence supérieure à 40 daN.
- Le système de liaison fusible comprend au moins une vis assemblant entre eux le support avant d'aile avant et le support inférieur d'aile avant, la vis étant reçue dans un trou oblong et étant tarée pour maintenir assemblés lesdits supports avant et inférieur sous l'application d'une force inférieure à 60 daN visant à les écarter l'un de l'autre selon l'axe transversal du véhicule, de préférence inférieure à 80 daN.
- Le système de liaison fusible comprend au moins une vis assemblant entre eux le support avant d'aile avant et le support inférieur d'aile avant, la vis étant reçue dans un trou oblong et étant tarée pour autoriser la séparation desdits supports avant et inférieur sous l'application d'une force supérieure à 60 daN visant à les écarter l'un de l'autre selon l'axe transversal du véhicule, de préférence supérieure à 80 daN.
- Le système de liaison fusible comprend en outre une interface fixée sur ou sous la platine de fixation d'au moins un support portant le ou les trous oblongs, l'interface présentant une ouverture pour le passage de ladite vis de fixation en regard du ou desdits trous oblongs, et une zone de résistance mécanique amoindrie destinée à se rompre sous l'effet d'une force exercée par coulissement de ladite vis selon la longueur dudit trou oblong débouchant lors de l'application d'une force visant écarter les supports l'un de l'autre selon la direction transversale du véhicule.
- L'interface fusible est une interface en matériau plastique.
- Le système de liaison fusible comprend au moins au moins une vis fusible assemblant entre eux le support avant d'aile avant et le support inférieur d'aile avant, de préférence ladite vis fusible est en matériau plastique.

Comme on l'aura compris à la lecture de la définition qui vient d'en être donnée, l'invention consiste à rendre fusible la fixation entre l'aile et la doublure d'aile. Pour ce faire, l'invention va rendre fusible la liaison entre les pièces intermédiaires assurant la liaison entre l'aile et sa doublure à savoir entre le support avant d'aile avant et le support d'inférieur d'aile avant, liaison qui était rigide dans l'art antérieur. Cette liaison fusible permet un déplacement relatif d'une partie des pièces selon l'axe Y du véhicule c'est-à-dire l'axe transversal du véhicule.

En effet, lors d'un impact le projecteur va prendre appui sur le support avant d'aile avant ce qui va permettre de casser la liaison fusible et de libérer les contraintes dans la zone en question. Le projecteur va s'échapper selon l'axe transversal du véhicule et le pare-chocs peut s'écraser en écartant ses extrémités.

Ainsi la rupture de la liaison fusible va permettre une désolidarisation de l'aile et de sa doublure, ce qui va permettre de préserver la doublure d'aile et le support d'aile avant. Ces pièces faisant partie de la structure du véhicule, le gain en réparabilité est immédiat. Le support avant d'aile avant est également moins sollicité ce qui permet de le préserver. Ensuite, l'échappement du projecteur selon l'axe transversal du véhicule permet de réduire la sollicitation de l'appui de façade ce qui a pour conséquence de réduire les efforts tranchants au niveau du brancard. Enfin, l'enfoncement d'une jambe est amélioré ce qui permet de diminuer l'agressivité du véhicule.

On notera que la fixation d'éléments structure et de carrosserie par le biais de liaisons fusibles est connue de l'art antérieur, et par exemple du document EP1398249. Ce document décrit un support multifonction pour le positionnement et la fixation de différents éléments de carrosserie avant d'un véhicule automobile. Le support va se plier ou se rompre sous l'action d'un choc s'exerçant sur le capot ou sur l'aile avant en entrainant son affaissement. La cinématique du choc est donc différente de celle visée par l'invention.

L'invention sera bien comprise et d'autres aspects et avantages apparaîtront clairement à la lecture de la description qui suit, donnée à tire d'exemple, en référence aux planches de dessins annexées sur lesquelles :
- la figure 1 illustre une première variante de l'invention telle que vue de dessus
- les figures 2 à 4 illustrent la cinétique de rupture d'une deuxième variante de l'invention telle que vue de dessous.

Dans la description qui suit, le terme « comprendre » est synonyme de « inclure » et n'est pas limitatif en ce qu'il autorise la présence d'autres éléments dans le véhicule. Il est entendu que le terme « comprendre » inclut les termes « consister en ».

De même, les termes « inférieur », « supérieur », « avant », « arrière » s'entendront par rapport à l'orientation générale du véhicule. « Inférieur » désignera une proximité au sol plus importante que « supérieur » selon l'axe vertical. Les axes longitudinal, transversal et vertical du véhicule sont nommés respectivement les axes X, Y et Z du véhicule.

L'invention concerne un véhicule comprenant au moins une aile avant et au moins une doublure d'aile avant, le véhicule étant remarquable en ce que l'aile avant est liée à la doublure d'aile avant par au moins un système de liaison fusible, de préférence par un système de liaison fusible.

Par « système de liaison fusible » on entend un système de liaison configuré pour se rompre ou se détacher sous l'application d'une force d'une direction donnée et d'une intensité supérieure à un seuil déterminé. Dans le cadre de l'invention la force est une force d'écartement de l'aile et de la doublure d'aile selon la largeur du véhicule (axe transversal), et l'intensité de la force doit être supérieure à 60 daN, de préférence supérieure à 80 daN. La force d'écartement résulte d'un choc frontal urbain (à faible vitesse) qui a pour conséquence de déformer le pare-chocs et d'enfoncer le projecteur avant.

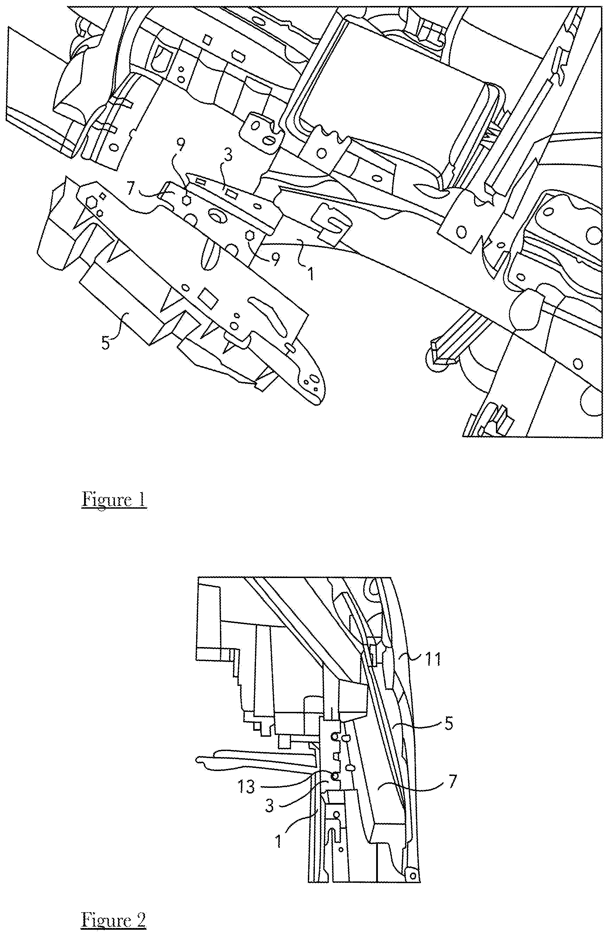

On se référera tout d'abord à la figure 1 illustrant un premier exemple de réalisation de l'invention et montrant un agencement d'un véhicule avec une doublure d'aile avant 1 reliée à un support inférieur 3 d'aile avant. Dans cet exemple de réalisation, le support inférieur 3 d'aile avant (ci-après support inférieur 3) est fixé de manière rigide à la doublure d'aile avant 1, par exemple par soudage via des points de soudure électriques (PSE). L'ensemble ainsi formé fait partie de la structure du véhicule. L'aile avant (non représentée pour des raisons de clarté) et le pare-chocs 5 sont fixés de manière rigide sur le support avant 7 d'aile avant (ci-après support avant 7).

Selon une mise en oeuvre préférée de l'invention le support inférieur 3 et le support avant 7 sont liés entre eux par un système de liaison fusible. Dans ce premier exemple de réalisation de l'invention, le caractère fusible du système de liaison est obtenu par l'emploi de vis 9 de fixation fusibles, par exemple des vis en matériau plastique qui sont aptes à se rompre sous l'effet d'une pression suffisante.

La figure 2 illustre un deuxième mode de réalisation de l'invention. Comme dans l'exemple précédent, l'aile avant 11 et le pare-chocs 5 sont fixés de manière rigide au support avant 7. Le support inférieur 3 est fixé de manière rigide à la doublure d'aile avant 1. Dans ce deuxième exemple de réalisation les vis reliant le support inférieur 3 et le support avant 7 n'ont pas été représentées pour des raisons de clarté. On peut donc voir que le support avant présente au niveau du passage des vis des trous 13 débouchant sur un des côtés du support lui donnant une forme de peigne. Ces trous débouchants 13 sont préférentiellement configurés pour s'ouvrir sur le côté du support inférieur 3 placé en regard du support avant 7.

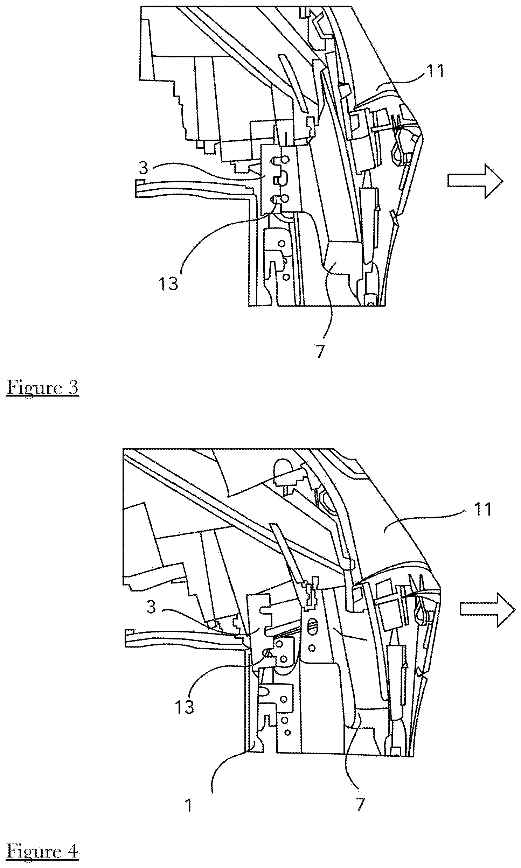

De la sorte, en cas de collision frontale générant un choc d'une force supérieure à une valeur prédéfinie, les deux supports vont pouvoir coulisser l'un par rapport à l'autre selon l'axe transversal (Y) du véhicule comme illustré à la figure 3 jusqu'à être détachés l'un de l'autre comme illustré sur la figure 4. Ce mouvement est généré par la déformation du pare-chocs qui sous l'effet de son écrasement va écarter ses extrémités en direction de l'extérieur du véhicule. Le pare-chocs entraîne avec lui l'aile avant 11 et le support avant 7. Les vis de fixation vont suivre le support avant 7 coulissant le long des ouvertures débouchantes 13 du support inférieur 3 jusqu'à en être totalement détachées. Ce coulissement est rendu possible par un tarage des vis de fixation autorisant un mouvement des vis sous l'action d'une force supérieure à un seuil défini. La force associée à ce tarage sera déterminée sans peine par l'homme du métier en fonction de la sensibilité qu'il souhaite donner au caractère fusible de la liaison et en fonction du nombre de vis utilisées pour cette liaison.

A titre d'exemple, lorsque deux vis sont utilisées pour effectuer la liaison fusible, on pourra envisager un tarage des vis compris entre 30 et 50 daN, de préférence à 40 daN. On aura compris que le tarage des deux vis à 40 daN signifie que les vis maintiendront en position l'un par rapport à l'autre les deux supports inférieur et avant tant que qu'une force inférieure ou égale à 80 daN est exercée sur lesdits supports en vue de leur séparation, mais autorisera le coulissement des deux supports l'un par rapport à l'autre lorsqu'une force supérieure à 80 daN est exercée sur lesdits supports en vue de leur séparation. Un tarage de la vis à une valeur inférieure fragiliserait trop le véhicule en rendant trop sensible le système fusible, tandis ce qu'un tarage à une valeur supérieure aurait l'effet inverse et nuirait au caractère fusible du système de liaison.

Dans une variante de l'invention selon laquelle une seule vis est utilisée pour la fixation entre eux des supports inférieur et avant, le tarage des vis se fera de préférence à une valeur comprise entre 60 et 100 daN.

Comme on le voit en suivant la cinématique de séparation de l'aile et de sa doublure illustrée aux figures 2 à 4, la partie structurante du véhicule constituée par la doublure d'aile 1 et le support inférieur 3 va rester en place durant le déplacement de l'aile et du support avant. Ceci permet à ces pièces de structures de ne pas être déformées par le choc et donc améliore la réparabilité du véhicule par rapport à l'art antérieur.

Il est entendu qu'il est possible dans le cadre de l'invention que ce soit le support avant qui présente les trous débouchants sur le côté. Dans ce cas les trous seront orientés transversalement et ouverts en direction du support inférieur. Il est également possible qu'à la fois le support avant et le support inférieur présentent des trous débouchants.

Selon une variante préférée de l'invention non représentée, le véhicule présente en outre une interface fusible, par exemple une interface plastique destinée à se positionner sur ou sous la platine de fixation d'au moins un support portant les trous débouchants. Cette interface fusible présente des ouvertures pour le passage des vis de fixation. Lors de la séparation des deux supports avant et inférieur, l'interface fusible sera brisée par le passage des vis. Cette solution permet de palier les éventuelles variations pouvant être observées au niveau du tarage des vis. En particulier, lorsque la variation sur le tarage des vis conduit à une diminution de la force de tarage, l'interface fusible va éviter qu'un tarage trop faible ne cause un détachement non souhaité entre les deux supports.

Selon une autre mise en oeuvre de l'invention, la liaison fusible ne se fait pas entre les supports inférieur et avant, mais entre le support inférieur et la doublure d'aile avant et/ou entre l'aile et le support avant. A cet effet, les supports pourront présenter des zones de résistance amoindrie. Une autre possibilité est par exemple de fixer les supports sur l'aile ou la doublure d'aile au moyen de liaisons fusibles telles que par exemple des vis en plastique.

Un exemple de matière plastique utilisable pour les vis et/ou l'interface fusible est par exemple du polypropylène.

Néanmoins, l'homme du métier aura avantage à favoriser l'emploi de liaisons fusibles entre les deux supports avant et inférieur en raison de leur caractère central qui leur permet de protéger plus de pièces et en particulier de mieux protéger le brancard contre les efforts de cisaillement selon les directions transversales et longitudinales par rapport au véhicule.

## Revendications

1. Véhicule comprenant au moins une aile avant (11) et au moins une doublure (1) d'aile avant, l'aile avant (11) étant liée à la doublure (1) d'aile avant par au moins un système de liaison fusible configuré pour rompre ou se détacher sous l'application d'une force visant à écarter l'aile avant (11) et la doublure d'aile avant (1) l'une de l'autre selon l'axe transversal du véhicule, au moins l'aile avant (11) étant fixée à un support avant (7) d'aile avant et au moins la doublure (1) d'aile avant étant fixée à un support inférieur (3) d'aile avant, ledit véhicule étant **caractérisé en ce que** le système de liaison fusible entre l'aile avant (11) et la doublure (1) d'aile avant assure la liaison entre le support avant (7) d'aile avant et le support inférieur (3) d'aile avant

2. Véhicule selon la revendication 1 **caractérisé en ce que** le système fusible est configuré pour rompre ou se détacher sous l'application d'une force supérieure à 60 daN, de préférence supérieure à 80 daN.

3. Véhicule selon la revendication 1 ou 2 **caractérisée en ce que** le support inférieur (3) d'aile avant et/ou sur le support avant (7) d'aile avant comprend une platine de fixation avec au moins un trou oblong (13) pour le passage d'une vis de fixation, ledit trou étant débouchant sur un des côtés dudit support (7, 13) et orienté de façon à permettre un coulissement de ladite vis selon sa longueur lors de l'application d'une force visant écarter les supports l'un de l'autre selon la direction transversale du véhicule.

4. Véhicule selon la revendication 3 **caractérisé en ce que** le système de liaison fusible comprend au moins deux vis (9) assemblant entre eux le support avant (7) d'aile avant et le support inférieur (3) d'aile avant, chaque vis (9) étant reçue dans un trou oblong (13) et étant tarée pour maintenir assemblés lesdits supports avant (7) et inférieur (3) sous l'application d'une force inférieure à 30 daN au niveau de chacune desdites vis visant à écarter lesdits supports (7, 3) l'un de l'autre selon l'axe transversal du véhicule, de préférence inférieure à 40 daN..

5. Véhicule selon la revendication 3 **caractérisé en ce que** le système de liaison fusible comprend au moins une vis assemblant entre eux le support avant (7) d'aile avant et le support inférieur (3) d'aile avant, la vis étant reçue dans un trou oblong (13) et étant tarée pour maintenir assemblés lesdits supports avant (7) et inférieur (3) sous l'application d'une force inférieure à 60 daN visant à les écarter l'un de l'autre selon l'axe transversal du véhicule, de préférence inférieure à 80 daN.

6. Véhicule selon l'une des revendications 3 à 5 **caractérisé en ce que** le système de liaison fusible comprend en outre une interface fixée sur ou sous la platine de fixation d'au moins un support portant le ou les trous oblong, l'interface présentant une ouverture pour le passage de ladite vis de fixation en regard du ou desdits trous oblongs, et une zone de résistance mécanique amoindrie destinée à se rompre sous l'effet d'une force exercée par coulissement de ladite vis selon la longueur dudit trou oblong débouchant lors de l'application d'une force visant écarter les supports l'un de l'autre selon la direction transversale du véhicule.

7. Véhicule selon la revendication 6 **caractérisé en ce que** l'interface fusible est une interface en matériau plastique.

8. Véhicule selon l'une des revendications 1, 3 ou 6 **caractérisé en ce que** le système de liaison fusible comprend au moins au moins une vis fusible assemblant entre eux le support avant (7) d'aile avant et le support inférieur (3) d'aile avant, de préférence ladite vis est en matériau plastique.

## Patentansprüche

1. Fahrzeug, das mindestens einen Vorderflügel (11) und mindestens eine Vorderflügelverkleidung (1) umfasst, wobei der Vorderflügel (11) mit der Vorderflügelverkleidung (1) durch mindestens ein schmelzbares Verbindungssystem verbunden ist, das konfiguriert ist, um unter der Anwendung einer Kraft, die darauf abzielt, den Vorderflügel (11) und die Vorderflügelverkleidung (1) voneinander entlang der Querachse des Fahrzeugs abzuspreizen, zu brechen oder sich zu lösen, wobei mindestens der Vorderflügel (11) an einem vorderen Träger (7) des Vorderflügels befestigt ist, und mindestens die Vorderflügelverkleidung (1) an einem unteren Träger (3) des Vorderflügels befestigt ist, wobei das Fahrzeug **dadurch gekennzeichnet ist, dass** das schmelzbare Verbindungssystem zwischen dem Vorderflügel (11) und der Vorderflügelverkleidung (1) die Verbindung zwischen dem vorderen Träger (7) des Vorderflügels und dem unteren Träger (3) des Vorderflügels sicherstellt.

2. Fahrzeug nach Anspruch 1, **dadurch gekennzeichnet, dass** das schmelzbare System konfiguriert ist, um unter der Anwendung einer Kraft größer als 60 daN, vorzugsweise größer als 80 daN, zu brechen oder sich zu lösen.

3. Fahrzeug nach Anspruch 1 oder 2, **dadurch gekennzeichnet, dass** der untere Träger (3) des Vorderflügels und/oder auf dem vorderen Träger (7) des Vorderflügels eine Befestigungsplatte mit mindestens einem Langloch (13) für das Durchgehen einer Befestigungsschraube umfasst, wobei das Loch auf einer der Seiten des Trägers (7, 13) mündet und derart ausgerichtet ist, dass ein Gleiten der Schraube entlang seiner Länge bei dem Anwenden einer Kraft, die darauf abzielt, die Träger voneinander entlang der Querrichtung des Fahrzeugs abzuspreizen, erlaubt wird.

4. Fahrzeug nach Anspruch 3, **dadurch gekennzeichnet, dass** das schmelzbare Verbindungssystem mindestens zwei Schrauben (9) umfasst, die den vorderen Träger (7) des Vorderflügels und den unteren Träger (3) des Vorderflügels miteinander zusammenfügen, wobei jede Schraube (9) in einem Langloch (13) aufgenommen und tariert ist, um den vorderen Träger (7) und den unteren Träger (3) unter dem Anwenden einer Kraft, die in dem Bereich jeder der Schrauben kleiner ist als 30 daN, die darauf abzielt, die Träger (7, 3) voneinander entlang der Querachse des Fahrzeugs abzuspreizen, vorzugsweise kleiner als 40 daN, zusammengefügt zu halten.

5. Fahrzeug nach Anspruch 3, **dadurch gekennzeichnet, dass** das schmelzbare Verbindungssystem mindestens eine Schraube umfasst, die den vorderen Träger (7) des Vorderflügels und den unteren Träger (3) des Vorderflügels miteinander zusammengefügt hält, wobei die Schraube in einem Langloch (13) aufgenommen ist und tariert ist, um den vorderen Träger (7) und den unteren Träger (3) unter dem Anwenden einer Kraft, die kleiner ist als 60 daN, die darauf abzielt, sie voneinander entlang der Querachse des Fahrzeugs abzuspreizen, vorzugsweise kleiner als 80 daN, zusammengefügt zu halten.

6. Fahrzeug nach einem der Ansprüche 3 bis 5, **dadurch gekennzeichnet, dass** das schmelzbare Verbindungssystem außerdem eine Schnittfläche umfasst, die auf oder unter der Befestigungsplatte mindestens eines Trägers, der das oder die Langlöcher trägt, befestigt ist, wobei die Schnittfläche eine Öffnung für das Durchgehen der Befestigungsschraube gegenüber dem oder den Langlöchern aufweist, und eine Zone mit verminderter mechanischer Festigkeit, die dazu bestimmt ist, unter der Einwirkung einer Kraft zu brechen, die durch Gleiten der Schraube entlang der Länge des durchgehenden Langlochs ausgeübt wird, bei dem Anwenden einer Kraft, die darauf abzielt, die Träger voneinander entlang der Querrichtung des Fahrzeugs abzuspreizen.

7. Fahrzeug nach Anspruch 6, **dadurch gekennzeichnet, dass** die schmelzbare Schnittfläche eine Schnittfläche aus Kunststoff ist.

8. Fahrzeug nach einem der Ansprüche 1, 3 oder 6, **dadurch gekennzeichnet, dass** das schmelzbare Verbindungssystem mindestens eine schmelzbare Schraube umfasst, die den vorderen Träger (7) des Vorderflügels und den unteren Träger (3) des Vorderflügels miteinander verbindet, wobei die Schraube vorzugsweise aus Kunststoff besteht.

## Claims

1. A vehicle including at least one front fender (11) and at least one front fender liner (1), the front fender (11) being connected to the front fender liner (1) by at least one meltable connecting system configured to break or detach itself under the application of a force aiming to separate the front fender (11) and the front fender liner (1) from one another along the transverse axis of the vehicle, at least the front fender (11) being attached to a front fender front support (7) and at least the front fender liner (1) being attached to a front fender lower support (3), said vehicle being **characterized in that** the meltable connecting system between the front fender (11) and the front fender liner (1) ensures the connection between the front fender front support (7) and the front fender lower support (3).

2. The vehicle according to Claim 1, **characterized in that** the meltable system is configured to break or detach itself under the application of a force greater than 60 daN, preferably greater than 80 daN.

3. The vehicle according to Claim 1 or 2, **characterized in that** the front fender lower support (3) and/or on the front fender front support (7) includes an attachment plate with at least one oblong hole (13) for the passage of an attachment screw, said hole being opening out on one of the sides of said support (7, 13) and oriented so as to permit a sliding of said screw along its length during the application of a force aiming to separate the supports from one another along the transverse direction of the vehicle.

4. The vehicle according to Claim 3, **characterized in that** the meltable connection system includes at least two screws (9) assembling between them the front fender front support (7) and the front fender lower support (3), each screw (9) being received in an oblong hole (13) and being tared to keep said front (7) and lower (3) supports assembled under the application of a force less than 30 daN at the level of each of said screws aiming to separate said supports (7, 3) from one another along the transverse axis of the vehicle, preferably less than 40 daN.

5. The vehicle according to Claim 3, **characterized in that** the meltable connection system includes at least one screw assembling the front fender front support (7) and front fender lower support (3) with one another, the screw being received in an oblong hole (13) and being tared to keep said front (7) and lower (3) supports assembled under the application of a force less than 60 daN aiming to separate them from one another along the transverse axis of the vehicle, preferably less than 80 daN.

6. The vehicle according to one of Claims 3 to 5, **characterized in that** the meltable connection system further includes an interface attached on or beneath the attachment plate of at least one support carrying the oblong hole or holes, the interface having an opening for the passage of said attachment screw facing the or said oblong hole or holes, and a zone of reduced mechanical resistance intended to break under the effect of a force exerted by sliding of said screw along the length of said oblong hole opening out during the application of a force aiming to separate the supports from one another along the transverse direction of the vehicle.

7. The vehicle according to Claim 6, **characterized in that** the meltable interface is an interface made of plastic material.

8. The vehicle according to one of Claims 1, 3 or 6, **characterized in that** the meltable connection system includes at least one meltable screw assembling the front fender front support (7) and the front fender lower support (3) with one another, preferably said screw is made of plastic material.
